# EUROPÄISCHE PATENTSCHRIFT

(11) **EP 4 034 334 B1**
(45) Veröffentlichungstag und Bekanntmachung des Hinweises auf die Patenterteilung: **18.01.2023**
(21) Anmeldenummer: 19816622.5
(22) Anmeldetag: 03.12.2019
(51) Int. Cl.: B24B 37/34, B24B 37/08, B24B 7/17, B24B 7/04, B23Q 7/02, B23Q 7/16, B24B 27/00

(54) **WERKZEUGMASCHINE, INSBESONDERE SCHLEIFMASCHINE, MIT EINER BELADEEINRICHTUNG**
MACHINE TOOL, IN PARTICULAR GRINDING MACHINE, HAVING A LOADING DEVICE
MACHINE-OUTIL, EN PARTICULIER PONCEUSE, DOTÉE D'UN DISPOSITIF DE CHARGEMENT

(43) Veröffentlichungstag der Anmeldung: 03.08.2022
(73) Patentinhaber: Supfina Grieshaber GmbH & Co. KG, 77709 Wolfach (DE)
(72) Erfinder: BOSCHERT, Florian, 77716 Hofstetten (DE); SONNTAG, Daniel, 77756 Hausach (DE); FEHRENBACHER, Achim, 77716 Hofstetten (DE)
(74) Vertreter: DREISS Patentanwälte PartG mbB
(86) Internationale Anmeldenummer: PCT/EP2019/083545
(87) Internationale Veröffentlichungsnummer: WO 2021/110249

(56) Entgegenhaltungen:
- EP-A1- 2 159 001
- EP-A1- 2 260 975
- EP-A1- 2 301 714
- EP-B1- 2 301 714
- CN-A- 103 878 652
- DE-C2- 3 742 953
- JP-U- S5 020 294
- KR-B1- 102 039 147

## Beschreibung

Die Erfindung betrifft eine Werkzeugmaschine, insbesondere Schleifmaschine, mit einem Arbeitsraum, in welchem ein in einem Transportelement aufgenommenes Werkstück bearbeitbar ist, wobei das Transportelement mehrere Werkstückaufnahmen zur Aufnahme von zu bearbeitenden Werkstücken aufweist, wobei ein jeweils in einer Werkstückaufnahme aufgenommenes Werkstück mittels des Transportelements in den Arbeitsraum hinein und aus dem Arbeitsraum heraus transportierbar ist, wobei eine Beladeeinrichtung vorgesehen ist, mittels welcher einzelne Werkstücke jeweils einer Werkstückaufnahme des Transportelements zuführbar sind. Eine Schleifmaschine mit den Merkmalen des Oberbegriffs des Patentanspruchs 1 ist aus der KR 102 039 147 B1 bekannt.

Eine als Doppelseitenplanschleifmaschine ausgebildete Werkzeugmaschine ist aus der DE 37 42 953 C2 bekannt. Bei einer solchen Werkzeugmaschine ist der Arbeitsraum spaltförmig ausgebildet und zwischen einander zugewandten Wirkflächen von zwei Schleifscheiben begrenzt. Ein scheibenförmiges, drehbares Transportelement ist mit Werkstückaufnahmen versehen, welche jeweils zur Aufnahme eines zu schleifenden Werkstücks dienen. Zur Beladung der Werkstückaufnahmen schlägt die DE 37 42 953 C2 vor, zu schleifende Werkstücke in Stapel zu bevorraten und das jeweils untere Werkstück zur Überführung in eine Werkstückaufnahme freizugeben.

Der vorliegenden Erfindung liegt die Aufgabe zugrunde, eine Werkzeugmaschine mit einer einfach aufgebauten Beladeeinrichtung zu schaffen, welche eine schnelle Beladung eines Transportelements ermöglicht.

Diese Aufgabe wird bei einer Werkzeugmaschine der eingangs genannten Art dadurch gelöst, dass die Beladeeinrichtung ein um eine Antriebsachse drehbares Transportrad umfasst, das entlang seines Umfangs verteilt angeordnete Werkstückhaltebereiche aufweist, welche bezogen auf die Antriebsachse in einer Richtung nach radial innen mit einzelnen Werkstücken bestückbar sind und welche bezogen auf die Antriebsachse in einer Richtung nach radial außen einzelne Werkstücke in jeweilige Werkstückaufnahmen des Transportelements freigeben.

Das erfindungsgemäße Transportrad ermöglicht es, das Transportrad entlang seines Umfangs mit zueinander versetzt angeordneten Werkstücken zu bestücken und diese Werkstücke wieder freizugeben. Die Bestückung des Transportrads mit Werkstücken erfolgt bezogen auf die Antriebsachse des Transportrads in einer Richtung nach radial innen; die Freigabe erfolgt eines Werkstücks erfolgt in entgegengesetzter Richtung.

Die erfindungsgemäße Beladeeinrichtung ist relativ einfach aufgebaut und ermöglicht es durch eine vergleichsweise einfache Kinematik, nämlich durch das Drehen um die Antriebsachse des Transportrads, Werkstücke aus einem Zuführbereich in einen Freigabebereich zu überführen. Insbesondere ist es möglich, dass die Bestückung des Transportrads mit einem Werkstück und die Freigabe eines anderen Werkstücks gleichzeitig erfolgen.

Die Beladeeinrichtung ermöglicht eine besonders zuverlässige, verkantungsfreie und schnelle Beladung auch von Werkstücken, welche an ihren Rändern noch Grate aufweisen.

Vorzugsweise sind entlang des Umfangs des Transportrads mindestens zwei, insbesondere mindestens drei, insbesondere mindestens vier, insbesondere mindestens sechs, insbesondere mindestens acht Werkstückhaltebereiche angeordnet. Vorzugsweise sind die Werkstückhaltebereiche entlang des Umfangs des Transportrads gesehen zueinander äquidistant beabstandet.

Eine bevorzugte Ausführungsform sieht vor, dass die Antriebsachse des Transportrads horizontal ausgerichtet ist. Hierunter wird nicht nur eine bezogen auf die Schwerkraftrichtung exakt horizontale Ausrichtung verstanden, sondern auch eine Ausrichtung, welche gegenüber dieser Horizontalen um maximal 20° geneigt ist. Die zumindest im Wesentlichen horizontale Ausrichtung der Antriebsachse hat den Vorteil, dass sich die Werkstückhaltebereiche des Transportrads in einem unteren Bereich des Transportrads tangential an einem zumindest im Wesentlichen horizontal ausgerichteten Transportelement vorbei bewegen können.

Vorzugsweise erstrecken sich die Werkstückhaltebereiche bezogen auf die Antriebsachse in radialer Richtung, was eine einfache Bestückung des Transportrads und eine einfache Freigabe der Werkstücke ermöglicht.

Grundsätzlich ist es möglich, dass ein Werkstück und ein Werkstückhaltebereich miteinander formschlüssig zusammenwirken. Zusätzlich oder alternativ hierzu ist es aber auch möglich, dass ein Werkstück über Magnetkräfte an oder in einem Werkstückhaltebereich gehalten ist.

Eine besonders vorteilhafte Ausführungsform sieht vor, dass die Werkstückhaltebereiche Haltestifte aufweisen. Diese ermöglichen insbesondere die Aufnahme ringförmiger Werkstücke, wobei die Haltestifte einen von dem Werkstück umschlossenen Ringraum durchdringen können (zur Bestückung des Transportrads), und wobei die Haltestifte auch wieder aus dem Ringraum des Werkstücks herausgeführt werden können (zur Freigabe des Werkstücks).

Es ist ferner bevorzugt, wenn eine erste Antriebseinrichtung zur Bewegung des Transportelements, eine zweite Antriebseinrichtung zur Drehung des Transportrads und eine Steuereinrichtung vorgesehen sind, wobei die Steuereinrichtung die beiden Antriebseinrichtungen derart steuert, dass eine Bewegung der Werkstückaufnahmen des Transportelements und eine Bewegung der Werkstückhaltebereiche des Transportrads miteinander synchronisiert sind. Für den Fall, dass die Werkstückhaltebereiche Haltestifte aufweisen, ist es bevorzugt, dass diese Haltestifte mit den Werkstückaufnahmen des Transportelements in einem kämmenden Eingriff stehen.

Insbesondere ist es bevorzugt, wenn die erste Antriebseinrichtung eine Drehantriebseinrichtung zur Drehung des Transportelements um eine insbesondere vertikale Achse ist. Ein solches Transportelement ist insbesondere durch die Transportscheibe einer Schleifmaschine, insbesondere durch die Transportscheibe einer Doppelseitenplanschleifmaschine, gebildet.

Es ist ferner bevorzugt, wenn ein Zuführbereich zur Zuführung von Werkstücken vorgesehen ist, in welchem Werkstücke vereinzelt bereithaltbar und jeweils einem Werkstückhaltebereich zuführbar sind.

Der Zuführbereich ist vorzugsweise benachbart zu einem oberen Bereich des Transportrads angeordnet. Mit einem "oberen Bereich des Transportrads" ist ein Bereich gemeint, welcher bei einer nicht vertikalen Orientierung der Antriebsachse des Transportrads bezogen auf die Schwerkraftrichtung weiter oben angeordnet ist als andere, weiter unten liegende Bereiche des Transportrads.

Es wird ferner vorgeschlagen, dass der Zuführbereich eine Auflage zur Bereithaltung eines einzelnen Werkstücks aufweist. Dies ermöglicht es, dass die Werkstückhaltebereiche des Transportrads in den Bereich dieser Auflage hineinbewegt werden und auf diese Weise die an der Auflage bereitgehaltenen einzelnen Werkstücke erfassen und mitnehmen können.

Sofern die Werkstückhaltebereich Haltestifte aufweisen, ist es bevorzugt, wenn die Auflage einen Freiraum oder Schlitz aufweist, der es ermöglicht, dass ein Haltestift durch die Auflage hindurch in einen Raum oberhalb der Auflage eintauchen kann, wobei diese Eintauchbewegung mit der Mitnahme eines insbesondere ringförmigen Werkstücks einhergeht.

Es ist ferner bevorzugt, wenn der Zuführbereich eine Rutschrampe zur Anordnung eines Vorrats von Werkstücken aufweist. Diese ermöglicht eine einfache Bevorratung von Werkstücken, welche schwerkraftbedingt auf der Rampe abrutschen, wobei das jeweils unterste Werkstück von dem nächsten freien Werkstückhaltebereich des Transportrads aufgenommen werden kann. Diese Art der Bevorratung von Werkstücken eignet sich besonders gut auch für Werkstücke, welche an ihren Rändern noch Grate aufweisen.

Vorzugsweise ist ein Freigabebereich zur Freigabe eines Werkstücks von einem unteren Bereich des Transportrads gebildet. Hiermit ist ein Bereich des Transportrads gemeint, welcher bei einer nicht vertikalen Ausrichtung der Antriebsachse des Transportrads in einem bezogen auf die Schwerkraftrichtung weiter unteren Bereich des Transportrads liegt als andere Bereiche des Transportrads. Die Anordnung des Freigabebereichs in einem unteren Bereich des Transportrads hat den Vorteil, dass eine Freigabe der Werkstücke schwerkraftunterstützt erfolgen kann. In diesem Zusammenhang ist es ferner vorteilhaft, dass in den Werkstückhaltebereichen gehaltene Werkstücke auf ihrem Weg zwischen dem Zuführbereich und dem Freigabebereich nicht nur durch die Schwerkraft unterstützt, sondern auch fliehkraftunterstützt in Richtung nach radial außen bewegt werden, was eine weitere Überführung in eine Werkstückaufnahme des Transportelements hinein unterstützt.

Um eine zuverlässige Überführung eines Werkstücks zwischen einem Zuführbereich und dem Freigabebereich zu ermöglichen, ist es bevorzugt, wenn eine Rückhalteeinrichtung vorgesehen ist, welche bezogen auf die Antriebsachse radial außerhalb der Werkstückaufnahmen angeordnet ist und sich insbesondere zwischen dem Zuführbereich und dem Freigabebereich erstreckt.

Eine bevorzugte Rückhalteeinrichtung weist eine konkav gekrümmte Anlagefläche auf, an welcher ein freizugebendes Werkstück zumindest in einem zu dem Freigabebereich benachbarten Bereich anliegt. Dies geht insbesondere einher mit einer Ausrichtung der Werkstücke in einer Lage, welcher einer Aufnahmelage innerhalb einer Werkstückaufnahme des Transportelements entspricht. In diesem Zusammenhang ist es bevorzugt, wenn ein Endabschnitt der Anlagefläche bezogen auf eine Aufnahmefläche des Transportelements tangential oder zumindest im Wesentlichen tangential ausgerichtet ist.

Weitere Merkmale und Vorteile der Erfindung sind Gegenstand der nachfolgenden Beschreibung und der zeichnerischen Darstellung eines bevorzugten Ausführungsbeispiels.

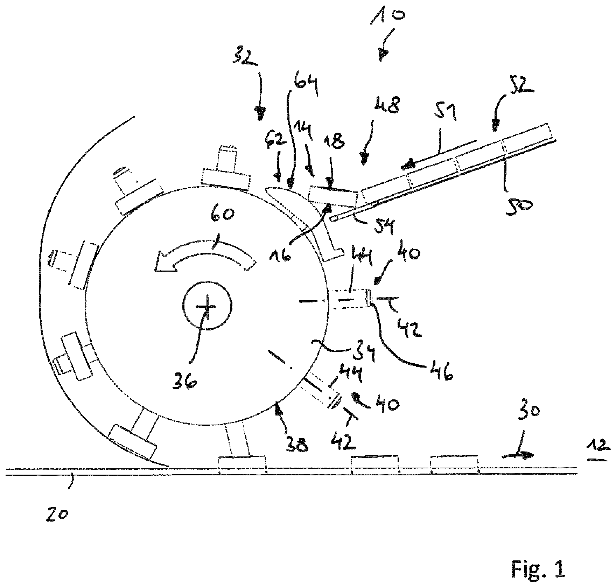

In der Zeichnung zeigt
- Fig. 1: Seitenansicht einer Ausführungsform einer Beladeeinrichtung; und
- Fig. 2: eine perspektivische Ansicht der Beladeeinrichtung gemäß Fig. 1 und eines Transportelements einer Werkzeugmaschine.

In der Zeichnung ist eine insgesamt mit dem Bezugszeichen 10 dargestellte Werkzeugmaschine mit jenen Teilen dargestellt, die für die vorliegende Erfindung relevant sind. Bei der Werkzeugmaschine 10 handelt es sich um eine Planschleifmaschine, insbesondere eine Doppelseitenplanschleifmaschine, mit einem Arbeitsraum 12, welcher sich zwischen zwei nicht dargestellten Schleifscheiben erstreckt, die miteinander zugewandten Wirkflächen Werkstücke 14 bzw. deren voneinander abgewandten Stirnflächen 16 und 18 schleifend bearbeiten.

Zur Handhabung der Werkstücke 14 ist ein scheibenförmiges Transportelement 20 vorgesehen, welches mittels einer ersten Antriebseinrichtung 22 um eine vertikale Achse 24 drehbar angetrieben ist. Das Transportelement 20 weist eine Mehrzahl von Werkstückaufnahmen 26 auf, welche insbesondere in Form von Durchbrechungen des scheibenförmigen Transportelements 20 ausgebildet sind und jeweils zur Aufnahme eines Werkstücks 14 dienen. Die Werkstückaufnahmen 26 sind vorzugsweise entlang eines Teilkreises um die vertikale Achse 24 regelmäßig verteilt angeordnet.

Bei Anordnung eines Werkstücks 14 in einer Werkstückaufnahme 26 ist das Werkstück 14 innerhalb des Arbeitsraums 12 zwischen den Wirkflächen der Schleifscheiben aufgenommen; in einem Bereich außerhalb des Arbeitsraums 12 ist zur Abstützung der Werkstücke 14 nach unten hin in an sich bekannter Weise eine Abstützfläche 28 vorgesehen, welche unterhalb des Transportelements 20 angeordnet ist.

Bei Drehung des Transportelements 20 um die vertikal Achse 24 bewegen sich einzelne Werkstücke 14, die jeweils in einer Werkstückaufnahme 26 aufgenommen sind, entlang einer (in diesem Fall gekrümmten) Transportrichtung 30 in den Arbeitsraum 12 hinein. Nach Bearbeitung innerhalb des Arbeitsraums 12 und unter Beibehaltung der Drehrichtung des Transportelements 20 werden schleifend bearbeitete Werkstücke 14 am Ende des Arbeitsraums 12 wieder aus diesem herausgeführt. Es ist möglich, dass die Werkstücke 14 durch kontinuierliche und weitere Drehung des Transportelements 20 mehrfach in den Arbeitsraum 12 hinein und aus diesem wieder herausgeführt werden.

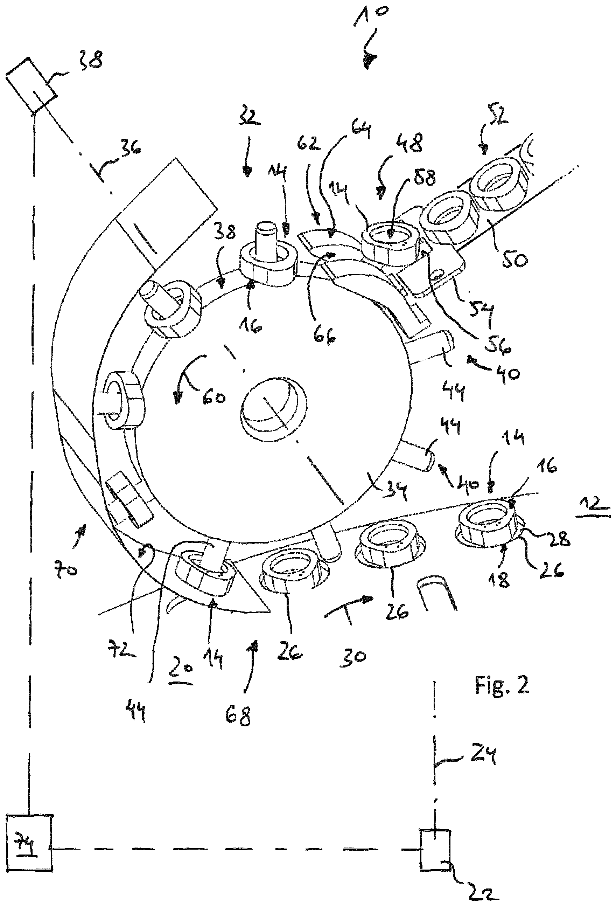

Um die Werkstücke 14 in den Werkstückaufnahmen 26 anzuordnen, ist eine nachfolgend erörterte Beladeeinrichtung 32 vorgesehen. Die Beladeeinrichtung 32 weist ein Transportrad 34 auf, das um eine horizontale Antriebsachse 36 drehbar angetrieben ist, und zwar mittels einer zweiten Antriebseinrichtung 38, vergleiche Figur 2. Es ist bevorzugt, dass die Antriebsachse 36 bezogen auf die vertikale Achse 24 radial ausgerichtet ist.

Das Transportrad 34 weist eine Umfangsfläche 38 auf. Entlang der Umfangsfläche 38 verteilt angeordnet sind Werkstückhaltebereiche 40 vorgesehen. Die Werkstückhaltebereich erstrecken sich vorzugsweise jeweils entlang Achsen 42, die bezogen auf die Antriebsachse 36 radial ausgerichtet sind.

Die Werkstückhaltebereiche 40 weisen Haltestifte 44 auf, welche vorzugsweise bezogen auf die Erstreckungsachse 42 rotationssymmetrisch, insbesondere kegelstumpfförmig oder zylindrisch ausgebildet sind. Ferner weisen die Haltestifte 44 an ihren nach radial außen weisenden freien Ende vorzugsweise jeweils eine Abrundung 46 auf.

Die Werkzeugmaschine 10 umfasst eine insgesamt mit dem Bezugszeichen 48 bezeichneten Zuführbereich, der bezogen auf die Antriebsachse 36 des Transportrads 34 benachbart zu einem oberen Bereich des Transportrads 34 angeordnet ist.

Der Zuführbereich 48 umfasst eine abschnittsweise dargestellte Rutschrampe 50, welche relativ zu der Horizontalen geneigt angeordnet ist, und zwar entlang einer Transportrichtung 51 gesehen in Richtung auf das Transportrad 34 zu nach unten. Die Rutschrampe 50 weist in der Zeichnung nicht dargestellte seitliche Begrenzungen auf, deren Abstand zueinander etwas größer ist als ein maximaler Außendurchmesser eines Werkstücks 14. Ein auf der Rutschrampe 50 angeordneter Vorrat 52 einer Reihe von Werkstücken 14 drückt mit seinem Gewicht auf das jeweils am weitesten unten angeordnete Werkstück 14. Das am weitesten unten angeordnete Werkstück 14 liegt temporär mit einer Stirnfläche 16 auf einer Auflage 54 auf.

Die Auflage 54 weist einen schlitzförmigen Freiraum 56 auf, in welchen hinein die Haltestifte 44 der Werkstückhaltebereiche 40 des Transportrads 34 bei Drehung um die Antriebsachse 36 hineintauchen können, in einen von einem Werkstück 14 umgrenzten Ringraum 58 hinein, sodass durch Drehung des Transportrads 34 ein Werkstück 14 von dem freien Ende eines Haltestifts 44 eines Werkstückhaltebereichs 40 erfasst werden kann und in einer Transportrichtung 60 des Transportrads 34 entlang des Umfangs des Transportrads 34 weitertransportiert werden kann.

Für den Übergang zwischen der Anordnung eines Werkstücks auf der Auflage 54 und einer Zwischenlage, in welcher ein Werkstück 14 mit einer Stirnfläche 16 auf der Umfangsfläche 38 des Transportrads 34 zur Auflage kommt (vergleiche Figur 2) ist ein Zwischenteil 62 vorgesehen. Dieses weist ausgehend von der Auflage 54 eine bogenförmig in Richtung auf die Umfangsfläche 38 gekrümmte Stützfläche 64 auf, welche ein Werkstück 14 während des Übergangs zwischen der Auflage 54 und einem Kontakt mit der Umfangsfläche 38 abstützt. Das Zwischenelement 62 weist ebenfalls einen schlitzförmigen Freiraum 66 auf, der es ermöglicht, dass die Haltestifte 44 der Werkstückhaltebereiche 40 durch das Zwischenteil 62 hindurchgeführt werden können, ohne dass es zu einer Kollision der genannten Bauteile kommt.

Aus der vorstehenden Beschreibung ergibt sich, dass die Werkstücke 14 bezogen auf die Antriebsachse 36 des Transportrads 34 nach radial innen in Richtung der Werkstückhaltebereiche 40 zugeführt werden. Die Bestückung des Transportrads 34 kann dadurch unterstützt werden, dass oberhalb der Auflage 54 und/oder des Zwischenteils 62 ein Niederhalter, beispielsweise eine Bürste, angeordnet ist, welche einem Abheben der Werkstücke 14 von der Auflage 54 und/oder von dem Zwischenteil 62 entgegenwirkt.

Ausgehend von dem Zuführbereich 48 werden die Werkstücke 14 entlang der Transportrichtung 60 durch Bewegung der Umfangsfläche 38 und der Werkstückhaltebereiche 40 in einen bezogen auf die Antriebsachse 36 unteren Bereich des Transportrads 34 überführt, der einen insgesamt mit dem Bezugszeichen 68 bezeichneten Freigabebereich bildet.

In Transportrichtung der Werkstücke 14 zwischen Zuführbereich 48 und Freigabebereich 68 gesehen ist ferner eine Rückhalteeinrichtung 70 wirksam, welche sich bezogen auf das Transportrad 34 radial außen um die Werkstückhaltebereiche 40 des Transportrads 34 erstreckt. Die Haltestifte 44 können berührungslos an einer konkav gekrümmten Anlagefläche 72 der Rückhalteeinrichtung 70 vorbeistreichen, wobei aber ein Abstand zwischen der Anlagefläche 72 und den freien Enden der Haltestifte 44 so gewählt ist, dass dieser kleiner ist als eine Höhe der Werkstücke 14, welche durch den Abstand der Stirnflächen 16 und 18 bestimmt ist.

Im Zuge der Bewegung der Werkstücke 14 von ihrer Zwischenlage (Werkstück 14 liegt erstmalig mit Stirnfläche 16 an Umfangsfläche 38 des Transportrads 34 an) hin zu dem Freigabebereich 68 verlagern sich die Werkstücke 14 sowohl schwerkraftbedingt als auch fliehkraftbedingt in Richtung nach radial außen, bis sie in einem zu dem Freigabebereich 68 benachbarten Abschnitt der Rückhalteeinrichtung 70 auf der Anlagefläche 72 zur Anlage kommen. Dabei befindet sich ein freies Ende eines Haltestifts 44 aber immer noch in Eingriff mit dem Ringraum 58 des Werkstücks 14. Eine weitere Drehung des Transportrads 34 führt dann dazu, dass ein Werkstück 14 nach radial außen in eine sich ebenfalls bewegende Werkstückaufnahme 26 hinein freigegeben wird.

Die Abstände der Werkstückhaltebereiche 40 des Transportrads 34 einerseits und die Abstände der Werkstückaufnahmen 26 des Transportelements 20 andererseits sind aufeinander abgestimmt. Die vertikale Achse 24 des Transportelements 20 ist senkrecht zu der horizontalen Antriebsachse 36 des Transportrads 34 ausgebildet. Dabei kämmen die Haltestifte 44 der Werkstückhaltebereiche 40 des Transportrads 34 mit den Werkstückaufnahmen 26 des Transportelements 20. Die Antriebseinrichtungen 22 des Transportelements 20 und 38 des Transportrads 34 sind über eine Steuereinrichtung 74 miteinander synchronisiert.

Die vorstehend beschriebene Beladeeinrichtung 32 ermöglicht eine schnelle und zuverlässige Beladung von Werkstücken 14 in die Werkstückaufnahmen 26 des Transportelements 20. In der Praxis konnte das Transportrad 34 pro Sekunde mit drei bis vier Werkstücken 14 beladen werden.

## Patentansprüche

1. Werkzeugmaschine (10), insbesondere Schleifmaschine, mit einem Arbeitsraum (12), in welchem ein in einem Transportelement (20) aufgenommenes Werkstück (14) bearbeitbar ist, wobei das Transportelement (20) mehrere Werkstückaufnahmen (26) zur Aufnahme von zu bearbeitenden Werkstücken (14) aufweist, wobei ein jeweils in einer Werkstückaufnahme (26) aufgenommenes Werkstück (14) mittels des Transportelements (20) in den Arbeitsraum (12) hinein und aus dem Arbeitsraum (12) heraus transportierbar ist, wobei eine Beladeeinrichtung (32) vorgesehen ist, mittels welcher einzelne Werkstücke (14) jeweils einer Werkstückaufnahme (26) des Transportelements (20) zuführbar sind, **dadurch gekennzeichnet, dass** die Beladeeinrichtung (32) ein um eine Antriebsachse (36) drehbares Transportrad (34) umfasst, das entlang seines Umfangs verteilt angeordnete Werkstückhaltebereiche (40) aufweist, welche bezogen auf die Antriebsachse (36) in einer Richtung nach radial innen mit einzelnen Werkstücken (14) bestückbar sind und welche bezogen auf die Antriebsachse (36) in einer Richtung nach radial außen einzelne Werkstücke (14) in jeweilige Werkstückaufnahmen (26) des Transportelements (20) freigeben.

2. Werkzeugmaschine (10) nach Anspruch 1, **dadurch gekennzeichnet, dass** die Antriebsachse (36) des Transportrads (34) horizontal ausgerichtet ist.

3. Werkzeugmaschine (10) nach einem der voranstehenden Ansprüche, **dadurch gekennzeichnet, dass** sich die Werkstückhaltebereiche (40) bezogen auf die Antriebsachse (36) in radialer Richtung erstrecken.

4. Werkzeugmaschine (10) nach einem der voranstehenden Ansprüche, **dadurch gekennzeichnet, dass** die Werkstückhaltebereiche (40) Haltestifte (44) aufweisen.

5. Werkzeugmaschine (10) nach einem der voranstehenden Ansprüche, **dadurch gekennzeichnet, dass** eine erste Antriebseinrichtung (22) zur Bewegung des Transportelements (20), eine zweite Antriebseinrichtung (38) zur Drehung des Transportrads (34) und eine Steuereinrichtung (74) vorgesehen sind, wobei die Steuereinrichtung (74) die beiden Antriebseinrichtungen (22, 38) derart steuert, dass eine Bewegung der Werkstückaufnahmen (26) des Transportelements (20) und eine Bewegung der Werkstückhaltebereiche (40) des Transportrads (34) miteinander synchronisiert sind.

6. Werkzeugmaschine (10) nach Anspruch 5, **dadurch gekennzeichnet, dass** die erste Antriebseinrichtung (22) eine Drehantriebseinrichtung zur Drehung des Transportelements (20) um eine insbesondere vertikale Achse (24) ist.

7. Werkzeugmaschine (10) nach einem der voranstehenden Ansprüche, **dadurch gekennzeichnet, dass** ein Zuführbereich (48) zur Zuführung von Werkstücken (14) vorgesehen ist, in welchem Werkstücke (14) vereinzelt bereithaltbar und jeweils einem Werkstückhaltebereich (40) zuführbar sind.

8. Werkzeugmaschine (10) nach Anspruch 7, **dadurch gekennzeichnet, dass** der Zuführbereich (48) benachbart zu einem oberen Bereich des Transportrads (34) angeordnet ist.

9. Werkzeugmaschine (10) nach Anspruch 7 oder 8, **dadurch gekennzeichnet, dass** der Zuführbereich (48) eine Auflage (54) zur Bereithaltung eines einzelnen Werkstücks (14) aufweist.

10. Werkzeugmaschine (10) nach einem der Ansprüche 7 bis 9, **dadurch gekennzeichnet, dass** der Zuführbereich (48) eine Rutschrampe (50) zur Anordnung eines Vorrats (52) von Werkstücken (14) aufweist.

11. Werkzeugmaschine (10) nach einem der voranstehenden Ansprüche, **dadurch gekennzeichnet, dass** ein Freigabebereich (68) zur Freigabe eines Werkstücks (14) von einem unteren Bereich des Transportrads (34) gebildet ist.

12. Werkzeugmaschine (10) nach einem der voranstehenden Ansprüche, **dadurch gekennzeichnet, dass** eine Rückhalteeinrichtung (70) vorgesehen ist, welche bezogen auf die Antriebsachse (36) radial außerhalb der Werkstückaufnahmen (40) angeordnet ist.

13. Werkzeugmaschine (10) nach Anspruch 12, **dadurch gekennzeichnet, dass** die Rückhalteeinrichtung (70) eine konkav gekrümmte Anlagefläche (72) aufweist, an welcher ein freizugebendes Werkstück (14) zumindest in einem zu dem Freigabebereich (68) benachbarten Bereich anliegt.

## Claims

1. Machine tool (10), in particular a grinding machine, having a working space (12) in which a workpiece (14) received in a transport element (20) can be machined, the transport element (20) having a plurality of workpiece receptacles (26) for receiving workpieces (14) to be machined, wherein a workpiece (14) received in each workpiece receptacle (26) is transportable into and out of the working space (12) by means of the transport element (20), wherein a loading device (32) is provided by means of which individual workpieces (14) can each be fed to one workpiece receptacle (26) of the transport element (20), **characterised in that** the loading device (32) comprises a transport wheel (34) which can rotate about a drive axis (36) and has workpiece holding regions (40) which are arranged and distributed along the circumference of the transport wheel (34), wherein the workpiece holding regions (40) can be loaded with individual workpieces (14) in a radially inward direction relative to the drive axis (36) and which release individual workpieces (14) into respective workpiece receptacles (26) of the transport element (20) in a radially outward direction relative to the drive axis (36).

2. Machine tool (10) according to claim 1, **characterised in that** the drive axis (36) of the transport wheel (34) is aligned horizontally.

3. Machine tool (10) according to one of the preceding claims, **characterised in that** the workpiece holding regions (40) extend in a radial direction with respect to the drive axis (36).

4. Machine tool (10) according to one of the preceding claims, **characterised in that** the workpiece holding regions (40) comprise holding pins (44).

5. Machine tool (10) according to one of the preceding claims, **characterised in that** a first drive device (22) for moving the transport element (20), a second drive device (38) for rotating the transport wheel (34) and a control device (74) are provided, the control device (74) controlling the two drive devices (22, 38) in such a way that a movement of the workpiece receptacles (26) of the transport element (20) and a movement of the workpiece holding regions (40) of the transport wheel (34) are synchronized with one another.

6. Machine tool (10) according to claim 5, **characterised in that** the first drive device (22) is a rotary drive device for rotating the transport element (20) about an axis (24), in particular about a vertical axis.

7. Machine tool (10) according to one of the preceding claims, **characterised in that** a feed region (48) for feeding workpieces (14) is provided, in which workpieces (14) can be kept ready individually and can each be fed to one workpiece holding region (40).

8. Machine tool (10) according to claim 7, **characterised in that** the feed region (48) is arranged adjacent to an upper region of the transport wheel (34).

9. Machine tool (10) according to claim 7 or 8, **characterised in that** the feed area (48) comprises a support (54) for holding a single workpiece (14) ready.

10. Machine tool (10) according to one of claims 7 to 9, **characterised in that** the feed region (48) comprises a slide ramp (50) for locating a supply (52) of workpieces (14).

11. Machine tool (10) according to one of the preceding claims, **characterised in that** a release region (68) for releasing a workpiece (14) is formed by a lower region of the transport wheel (34).

12. Machine tool (10) according to one of the preceding claims, **characterised in that** a retaining device (70) is provided, which is arranged radially outside the workpiece holders (40) with respect to the drive axis (36).

13. Machine tool (10) according to claim 12, **characterised in that** the retaining device (70) has a concavely curved contact surface (72) against which a workpiece (14) to be released rests at least in a region adjacent to the release region (68) .

## Revendications

1. Machine-outil (10), en particulier ponceuse, comprenant un espace de travail (12) dans lequel une pièce à usinée (14) logée dans un élément de transport (20) peut être usinée, dans laquelle l'élément de transport (20) présente plusieurs logements de pièce à usiner (26) pour loger des pièces à usiner (14) devant être usinées, dans laquelle une pièce à usiner (14) logée respectivement dans un logement de pièce (26) peut être transportée au moyen de l'élément de transport (20) jusque dans l'espace de travail (12) et hors de l'espace de travail (12), dans laquelle un dispositif de chargement (32) est prévu, au moyen duquel des pièces à usiner individuelles (14) peuvent être acheminées respectivement jusqu'à un logement de pièce à usiner (26) de l'élément de transport (20), **caractérisée en ce que** le dispositif de chargement (32) comprend une roue de transport (34) pouvant tourner autour d'un axe d'entraînement (36), qui présente des zones de maintien de pièce à usiner (40) agencées réparties le long de sa circonférence, qui peuvent être équipées de pièces à usiner individuelles (14) dans une direction radialement vers l'intérieur par rapport à l'axe d'entraînement (36) et qui libèrent des pièces à usiner individuelles (14) dans une direction radialement vers l'extérieur par rapport à l'axe d'entraînement (36) jusque dans des logements de pièce à usiner respectifs (26) de l'élément de transport (20).

2. Machine-outil (10) selon la revendication 1, **caractérisée en ce que** l'axe d'entraînement (36) de la roue de transport (34) est orienté horizontalement.

3. Machine-outil (10) selon l'une quelconque des revendications précédentes, **caractérisée en ce que** les zones de maintien de pièce à usiner (40) s'étendent dans une direction radiale par rapport à l'axe d'entraînement (36).

4. Machine-outil (10) selon l'une quelconque des revendications précédentes, **caractérisée en ce que** les zones de maintien de pièce à usiner (40) présentent des goupilles de maintien (44).

5. Machine-outil (10) selon l'une quelconque des revendications précédentes, **caractérisée en ce qu'**un premier dispositif d'entraînement (22) pour déplacer l'élément de transport (20), un second dispositif d'entraînement (38) pour faire tourner la roue de transport (34) et un dispositif de commande (74) sont prévus, dans laquelle le dispositif de commande (74) commande les deux dispositifs d'entraînement (22, 38) de telle sorte qu'un déplacement des logements de pièce à usiner (26) de l'élément de transport (20) et un déplacement des zones de maintien de pièce à usiner (40) de la roue de transport (34) sont synchronisés l'un avec l'autre.

6. Machine-outil (10) selon la revendication 5, **caractérisée en ce que** le premier dispositif d'entraînement (22) est un dispositif d'entraînement en rotation pour faire tourner l'élément de transport (20) en particulier autour d'un axe vertical (24).

7. Machine-outil (10) selon l'une quelconque des revendications précédentes, **caractérisée en ce qu'**une zone d'alimentation (48) est prévue pour alimenter des pièces à usiner (14), dans laquelle des pièces à usiner (14) peuvent être mises à disposition de manière séparée et peuvent être alimentées respectivement vers une zone de maintien de pièce à usiner (40).

8. Machine-outil (10) selon la revendication 7, **caractérisée en ce que** la zone d'alimentation (48) est agencée adjacente à une zone supérieure de la roue de transport (34).

9. Machine-outil (10) selon la revendication 7 ou 8, **caractérisée en ce que** la zone d'alimentation (48) présente un support (54) pour mettre à disposition une pièce à usiner individuelle (14).

10. Machine-outil (10) selon l'une quelconque des revendications 7 à 9, **caractérisée en ce que** la zone d'alimentation (48) présente une rampe de glissement (50) pour agencer une réserve (52) de pièces à usiner (14).

11. Machine-outil (10) selon l'une quelconque des revendications précédentes, **caractérisée en ce qu'**une zone de libération (68) est formée pour libérer une pièce à usiner (14) depuis une zone inférieure de la roue de transport (34).

12. Machine-outil (10) selon l'une quelconque des revendications précédentes, **caractérisée en ce qu'**un dispositif de de retenue (70) est prévu, qui est agencé radialement à l'extérieur des logements de pièce à usiner (40) par rapport à l'axe d'entraînement (36).

13. Machine-outil (10) selon la revendication 12, **caractérisée en ce que** le dispositif de retenue (70) présente une surface d'appui (72) incurvée de manière concave contre laquelle une pièce à usiner (14) devant être libérée repose au moins dans une zone adjacente à la zone de libération (68).
